# EUROPÄISCHE PATENTSCHRIFT

(11) **EP 2 572 112 B1**
(45) Veröffentlichungstag und Bekanntmachung des Hinweises auf die Patenterteilung: **19.03.2014**
(21) Anmeldenummer: 11723295.9
(22) Anmeldetag: 03.05.2011
(51) Int. Cl.: F16B 37/08, F16B 37/02

(54) **FEDERKLEMME**
SPRING CLIP
PINCE À RESSORT

(30) Priorität: 20.05.2010 DE 102010022198
(43) Veröffentlichungstag der Anmeldung: 27.03.2013
(73) Patentinhaber: A. Raymond et Cie, 38000 Grenoble (FR)
(72) Erfinder: SPITZ, Uwe, 79618 Rheinfelden (DE)
(74) Vertreter: RACKETTE Partnerschaft Patentanwälte
(86) Internationale Anmeldenummer: PCT/EP2011/057060
(87) Internationale Veröffentlichungsnummer: WO 2011/144441

(56) Entgegenhaltungen:
- EP-A2- 1 182 369
- JP-A- 11 159 516

## Beschreibung

Die Erfindung betrifft eine Federklemme gemäß dem Oberbegriff des Patentanspruchs 1.

Eine derartige Federklemme, ist aus EP 1 182 369 A2 bekannt. Die gattungsgemäße vorbekannte Federklemme zum Befestigen an einem mit einem Außengewinde versehenen Gewindeschaft verfügt über eine Grundplatte und über zwei an der Grundplatte angesetzte Anlenkschenkel. Jeder Anlenkschenkel ist mit einer Eingriffszunge zum Eingriff mit einem Außengewinde eines Gewindeschafts ausgebildet. An der Grundplatte sind bei der gattungsgemäßen Federklemme drei Federschenkel angesetzt, die sich gegenüber der Grundplatte federnd auf der den Anlenkschenkeln gegenüberliegenden Seite der Grundplatte erstrecken. Dadurch werden die Eingriffszungen bei Einfedern der Federschenkel in die Gewindegänge des Außengewindes eines Gewindeschafts gedrückt, auf den die Federklemme unter Anlage der Federschenkel auf einer Auflageplatte angedrückt sind.

Eine weitere Federklemme ist aus JP 11-159516 A bekannt. Diese vorbekannte Federklemme, die zum Befestigen an einem mit einem Außengewinde versehenen Gewindeschaft vorgesehen ist, verfügt über eine Grundplatte und über zwei an der Grundplatte angesetzte Anlenkschenkel. Jeder Anlenkschenkel trägt eine Eingriffszunge zum Eingriff mit einem Außengewinde eines Gewindeschafts und eine Manipulationszunge zum wenigstens Lockern oder zum Lösen des Eingriffs der Eingriffszunge mit einem Außengewinde eines Gewindeschafts. Die Manipulationszungen sind gegenüber einer durch eine Durchsteckausnehmung laufenden Diagonalen schräg ausgerichtet.

Der Erfindung liegt die Aufgabe zugrunde, eine Federklemme der eingangs genannten Art anzugeben, die sich durch einen sehr zuverlässigen Halt an einem mit einem Außengewinde versehenen Gewindeschaft auszeichnet und die sich verhältnismäßig einfach von dem Gewindeschaft lösen lässt.

Die Aufgabe wird bei einer Erfindung der eingangs genannten Art erfindungsgemäß mit den kennzeichnenden Merkmalen des Patentanspruchs 1 gelöst.

Dadurch, dass bei der erfindungsgemäßen Federklemme die Manipulationszungen so parallel zueinander und parallel zu einer Tangentialfläche an eine Durchsteckausnehmung ausgerichtet sind sowie einander diagonal gegenüberliegen, dass sich eine von Querkräften freie und damit drehmomentfreie Linearbewegung ergibt, lässt sich die Federklemme ohne die Gefahr von deren Verdrehen bei Ausüben von händisch aufgewendeten Druckkräften lockern beziehungsweise lösen und von einem Gewindeschaft abziehen.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Erläuterung eines Ausführungsbeispiels mit Bezug auf die Figuren der Zeichnung.

Es zeigen:
- Fig. 1: in einer perspektivischen Ansicht ein Ausführungsbeispiel einer erfindungsgemäßen Federklemme,
- Fig. 2: in einer Seitenansicht das Ausführungsbeispiel gemäß Fig. 1 in einer auf einem Gewindeschaft verklemmten Anordnung und in Anlage an einer Anlagefläche, und
- Fig. 3: in einer Seitenansicht eine Abwandlung des Ausführungsbeispiels gemäß Fig. 1 in einer Anordnung gemäß Fig. 2.

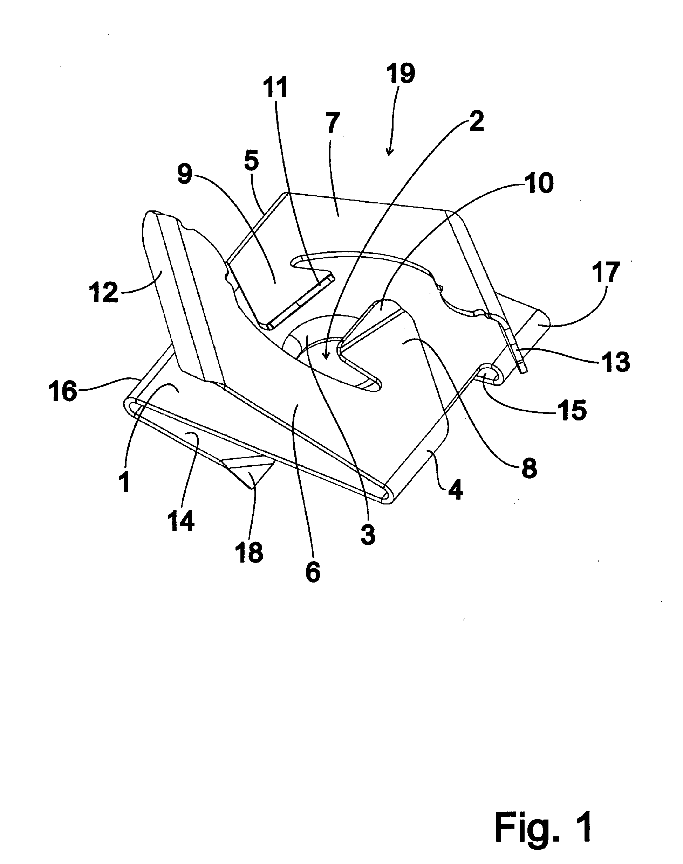

Fig. 1 zeigt in einer perspektivischen Ansicht ein Ausführungsbeispiel einer erfindungsgemäßen Federklemme, die in einem Stanz-Biege-Prozess aus einem flachen Metallstreifen hergestellt ist. Das Ausführungsbeispiel der erfindungsgemäßen Federklemme verfügt über eine im Wesentlichen quadratische Grundplatte 1, in deren Mitte eine rundliche Durchsteckausnehmung 2 von einer sich in Richtung einer Aufsteckseite von der Grundplatte 1 weg erstreckenden Führungshülse 3 umgeben ist.

An zwei gegenüberliegenden Anbindungsrandseiten der Grundplatte 1 sind über einander diagonal gegenüberliegende Umbiegeabschnitte 4, 5 zwei Anlenkschenkel 6, 7 angesetzt, die sich schräg von der Grundplatte 1 weg in Richtung der gegenüberliegenden Anbindungsrandseite erstrecken. Von jedem Anlenkschenkel 6, 7 erstreckt sich in Richtung der Mitte der Grundplatte 1 jeweils ein Eingriffsarm 8, 9, an dessen von dem jeweiligen Anlenkschenkel 6, 7 abgewandten Ende eine gegenüber dem jeweiligen Eingriffsarm 8, 9 von der Grundplatte 1 wegweisend abgewinkelte Eingriffszunge 10, 11 angesetzt ist.

Die Eingriffszungen 10, 11 sind keilförmig ausgebildet, wobei die Schrägflächen in Richtung des Anlenkschenkels 6, 7 weisen, mit dem die jeweilige Eingriffszunge 10, 11 verbunden ist.

An dem freien Ende jedes Anlenkschenkels 6, 7 ist eine Manipulationszunge 12, 13 angeformt, die sich in etwa rechtwinklig zu dem jeweiligen Anlenkschenkel 6, 7 abgewinkelt in Richtung der Grundplatte 1 erstreckt. Die Manipulationszungen 12, 13 sind zueinander sowie bezüglich einer Tangentialfläche an die Durchsteckausnehmung 2 parallel ausgerichtet und liegen sich bezüglich der Durchsteckausnehmung 2 diagonal direkt gegenüber.

Weiterhin verfügt das Ausführungsbeispiel einer erfindungsgemäßen Federklemme gemäß Fig. 1 über zwei Federschenkel 14, 15, die jeweils über einen Umbiegeabschnitt 16, 17 mit der Grundplatte 1 in den den Umbiegeabschnitten 4, 5, mit denen die Anlenkschenkel 6, 7 mit der Grundplatte 1 verbunden sind, gegenüberliegenden Eckbereichen verbunden sind. Die Federschenkel 14, 15 erstrecken sich auf der den Anlenkschenkeln 6, 7 gegenüberliegenden Seite der Grundplatte 1 von der Grundplatte 1 wegweisend in Richtung der gegenüberliegenden Anbindungsrandseite bis etwa in die Mitte der Grundplatte 1. Jeder Federschenkel 14, 15 verfügt an seinem dem betreffenden Umbiegeabschnitt 16, 17 abgewandten freien Ende über eine gegenüber dem betreffenden Federschenkel 14, 15 von der Grundplatte 1 wegweisend abgewinkelte Krallzunge 18, 19, die außenseitig angeordnet und spitzenartig ausgebildet ist.

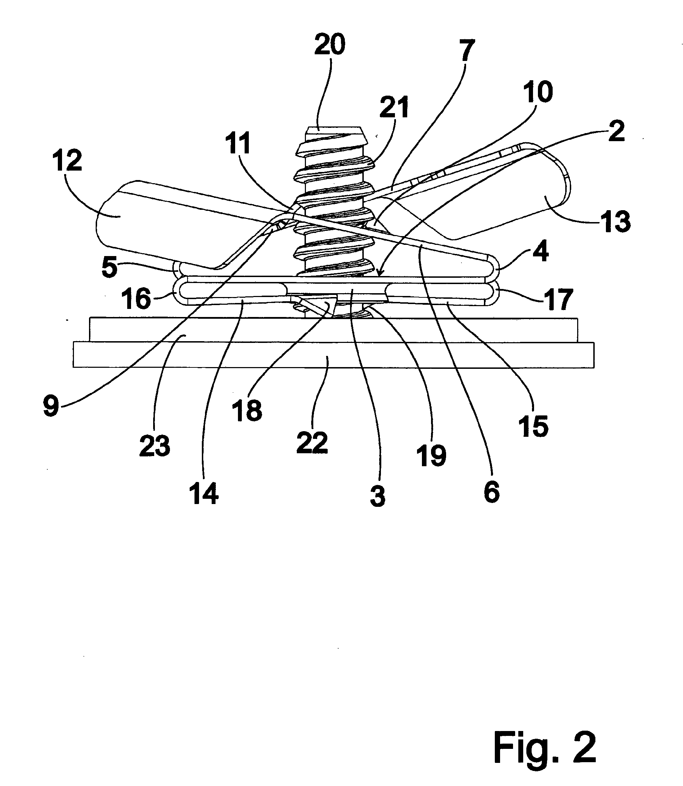

Fig. 2 zeigt in einer Seitenansicht das Ausführungsbeispiel einer erfindungsgemäßen Federklemme gemäß Fig. 1 in einer auf einen Gewindeschaft 20 aufgesteckten Anordnung, wobei der Gewindeschaft 20 über ein Außengewinde 21 verfügt und fest mit einem Trägerteil 22 verbunden ist, an dem ein Anbauteil 23 mittels der erfindungsgemäßen Federklemme zu befestigen ist. In der Anordnung gemäß Fig. 2 ist die erfindungsgemäße Federklemme unter Zusammendrücken der Manipulationszungen 12, 13 aufeinander zu oder mittels beispielsweise Daumen und Zeigefinger auch durch direktes Aufdrücken auf die der Grundplatte 1 abgewandte Seite der Anlenkschenkel 6, 7 beziehungsweise auf die Grundplatte 1 über das Außengewinde 21 bis zur Anlage der Krallzungen 18, 19 auf der dem Trägerteil 22 abgewandten Seite des Anbauteils 23 als Anlagefläche aufgesteckt, wobei die Federschenkel 14, 15 in Richtung der Grundplatte 1 gedrückt worden sind. Nach Freigeben der Manipulationszungen 12, 13 rasten die Eingriffszungen 10, 11 in das Außengewinde 21 und sichern somit das Anbauteil 23 an dem Trägerteil 22 gegen eine Bewegung in Axialrichtung, während die Krallzungen 18, 19 eine Drehung verhindern oder zumindest erschweren.

Dabei erleichtert die Führungshülse 3 das Durchführen des Gewindeschafts 20 durch die Durchsteckausnehmung 2. Bei dem Ausführungsbeispiel gemäß Fig. 1 ist die Führungshülse 3 gegenüber dem Federweg der Federschenkel 14, 15 verhältnismäßig kurz ausgebildet, so dass die Federschenkel 14, 15 relativ weit in Richtung der Grundplatte 1 einfedern können. Dadurch ergibt sich eine hohe Haltekraft der erfindungsgemäßen Federklemme an dem Gewindeschaft 20.

Zum Lösen des Eingriffs der Eingriffszungen 10, 11 mit dem Außengewinde 21 werden die Manipulationszungen 12, 13 wieder aufeinander zu bewegt, wobei sich durch die zueinander sowie zu der Tangentialfläche parallele und einander diagonal gegenüberliegende Anordnung der Manipulationszungen 12, 13 eine von Querkräften freie und damit drehmomentfreie Linearbewegung ergibt, so dass nach Lösen des Eingriffs der Eingriffszungen 10, 11 mit dem Außengewinde 21 die erfindungsgemäße Federklemme von dem Anbauteil 23 weg von dem Gewindeschaft 20 abgezogen werden kann.

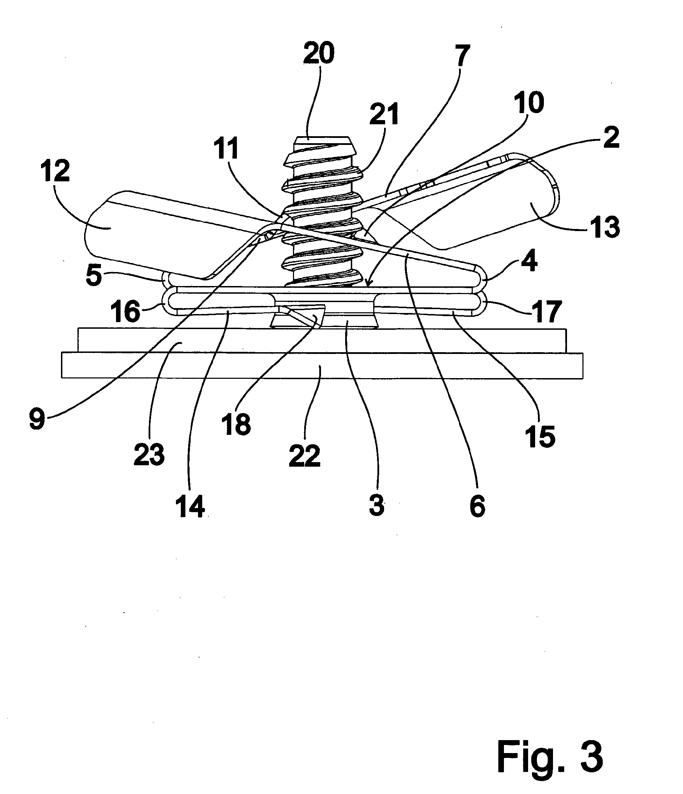

Fig. 3 zeigt eine Abwandlung des Ausführungsbeispiels einer erfindungsgemäßen Federklemme gemäß Fig. 1 in einer Anordnung gemäß Fig. 2, wobei sich den Ausführungen gemäß Fig. 1 und Fig. 3 einander entsprechende Elemente mit den gleichen Bezugszeichen versehen und im weiteren nicht näher erläutert sind. Die Ausführung gemäß Fig. 3 verfügt über eine Führungshülse 3, die gegenüber der Führungshülse 3 des Ausführungsbeispiels gemäß Fig. 1 länger ausgebildet ist. Dadurch kommt die der Grundplatte 1 abgewandte Randführungshülse 3 bereits bei verhältnismäßig wenig in Richtung der Grundplatte 1 eingefederten Federschenkeln 14, 15 in Anlage mit dem Anbauteil 23, so dass eine gewisse Dichtwirkung erzielt ist.

## Patentansprüche

1. Federklemme zum Befestigen an einem mit einem Außengewinde (21) versehenen Gewindeschaft (20) mit einer Grundplatte (1) und mit zwei an der Grundplatte (1) angesetzten Anlenkschenkeln (6, 7), die jeweils eine Eingriffszunge (10, 11) zum Eingriff mit einem Außengewinde (21) eines Gewindeschafts (20) tragen, wobei an der Grundplatte (1) wenigstens ein Federschenkel (14, 15) angesetzt ist, der sich gegenüber der Grundplatte (1) federnd auf der den Anlenkschenkeln (6, 7) gegenüberliegenden Seite der Grundplatte (1) erstreckt, **dadurch gekennzeichnet, dass** jeder Anlenkschenkel (6, 7) eine Manipulationszunge (12, 13) zum wenigstens Lockern oder zum Lösen des Eingriffs der Eingriffszunge (10, 11) mit einem Außengewinde (21) eines Gewindeschafts (20) trägt, dass an dem freien Ende jedes Anlenkschenkels (6, 7) eine gegenüber dem Anlenkschenkel (6, 7) abgewinkelte Manipulationszunge (12, 13) angesetzt ist, die sich in Richtung der Grundplatte (1) erstreckt, und dass die Manipulationszungen (12, 13) so parallel zueinander und parallel zu einer Tangentialfläche an eine Durchsteckausnehmung ausgerichtet sind sowie einander diagonal gegenüberliegen, dass sich eine von Querkräften freie und damit drehmomentfreie Linearbewegung ergibt.

2. Federklemme nach Anspruch 1, **dadurch gekennzeichnet, dass** zwei Federschenkel (14, 15) vorhanden sind.

3. Federklemme nach Anspruch 1 oder Anspruch 2, **dadurch gekennzeichnet, dass** an dem oder jedem Federschenkel (14, 15) eine sich von der Grundplatte (1) wegweisend erstreckende spitze Krallzunge (18, 19) angesetzt ist.

4. Federklemme nach einem der Ansprüche 1 bis 3, **dadurch gekennzeichnet, dass** die Eingriffszunge (10, 11) über einen Eingriffsarm (8, 9) mit dem Anlenkschenkel (6, 7) verbunden ist.

5. Federklemme nach einem der Ansprüche 1 bis 4, **dadurch gekennzeichnet, dass** die Grundplatte (1) umfänglich geschlossen ist und eine eine Durchsteckausnehmung (2) umschließende, sich in Richtung des oder jedes Federschenkels (14, 15) erstreckende Führungshülse (3) aufweist.

6. Federklemme nach Anspruch 5, **dadurch gekennzeichnet, dass** die Länge der Führungshülse (3) kleiner als der Federweg des oder jedes Federschenkels (14, 15) in axialer Richtung ist.

7. Federklemme nach einem der Ansprüche 4 bis 6, **dadurch gekennzeichnet, dass** die Eingriffszungen (10, 11) gegenüber dem betreffenden Eingriffsarm (8, 9), an dem sie angesetzt sind, von der Grundplatte (1) wegweisend abgewinkelt sind.

8. Federklemme nach Anspruch 7, **dadurch gekennzeichnet, dass** die Eingriffszungen (10, 11) keilförmig ausgebildet sind, wobei die Schrägflächen in Richtung des Anlenkschenkels (6, 7) weisen, an dem sie angesetzt sind.

## Claims

1. Spring clip for fastening to a threaded shaft (20) having an external thread (21), comprising a base plate (1) and two attached limbs (6, 7) connected to the base plate (1), each of which has an engagement lug (10, 11) for engaging with an external thread (21) of a threaded shaft (20), wherein at least one sprung limb (14, 15) which extends resiliently in relation to the base plate (1) on the side of the base plate (1) opposing the attached limbs (6, 7), **characterised in that** each attached limb (6, 7) carries a manipulation tongue (12, 13) for at least loosening or for releasing the engagement of the engagement lug (10, 11) with an external thread (21) of a threaded shaft (20), that a manipulation tongue (12, 13) which is downwardly angled relative to the attached limb (6, 7) is attached at the free end of each attached limb (6, 7), extending in the direction toward the base plate (1) and that the manipulation tongues (12, 13) are oriented parallel to one another and parallel to a tangential surface at a push-through cut-out and are positioned opposing one another diagonally, so that a linear motion free from transverse forces and therefore free from rotational moments results.

2. Spring clip according to claim 1, **characterised in that** two sprung limbs (14, 15) are provided.

3. Spring clip according to claim 1, **characterised in that** a pointed claw lug (18, 19) which faces away from the base plate (1) is attached to the, or each, sprung limb (14, 15).

4. Spring clip according to one of the claims 1 to 3, **characterised in that** the engagement lug (10, 11) is connected via an engagement arm (8, 9) to the attached limb (6, 7).

5. Spring clip according to one of the claims 1 to 4, **characterised in that** the base plate (1) is peripherally closed and has a guide sleeve (3) which extends in the direction of the, or each, sprung limb (14, 15) and encloses a push-through cut-out (2).

6. Spring clip according to claim 5, **characterised in that** the length of the guide sleeve (3) is smaller than the spring excursion of the, or each, sprung limb (14, 15) in the axial direction.

7. Spring clip according to one of the claims 4 to 6, **characterised in that** the engagement lugs (10, 11) are angled relative to the respective engagement arm (8, 9) to which they are attached, so as to face away from the base plate (1).

8. Spring clip according to claim 7, **characterised in that** the engagement lugs (10, 11) are configured wedgeshaped, wherein the inclined surfaces point in the direction of the attached limb (6, 7) to which said inclined surfaces are attached.

## Revendications

1. Attache élastique destinée à être montée en prise d'encastrement avec une tige filetée (20) munie d'un filetage extérieur (21), comprenant une plaque de base (1) et deux segments de pivotement par effet d'articulation (6, 7) disposés attenants à la plaque de base (1), qui sont respectivement munis d'une languette d'accrochage (10, 11) destinée à venir s'insérer en prise d'encastrement dans le filetage extérieur (21) d'une tige filetée (20), la plaque de base (1), dans laquelle au moins un segment élastique (14, 15) est en l'occurrence disposé attenant à la plaque de base (1) et s'étend, avec la possibilité de réagir élastiquement, en face de la plaque de base (1), sur le côté de la plaque de base (1) opposé aux segments de pivotement par effet d'articulation (6, 7), **caractérisée en ce que** chaque segment de pivotement par effet d'articulation (6, 7) comporte une languette de manipulation (12, 13) permettant au moins d'affaiblir ou permettant de supprimer la liaison d'encastrement de la languette d'accrochage (10, 11) avec le filetage extérieur (21) d'une tige filetée (20), **en ce qu'**il est prévu, attenante à l'extrémité libre de chaque segment de pivotement par effet d'articulation (6, 7), une languette de manipulation (12, 13) repliée selon une disposition angulaire par rapport au segment de pivotement par effet d'articulation (6, 7), qui s'étend dans la direction de la plaque de base (1) et **en ce que** les languettes de manipulation (12, 13) sont orientées avec une précision de parallélisme l'une par rapport à l'autre et avec une précision de parallélisme par rapport à la surface tangentielle d'un évidement définissant un passage d'emmanchement telles, et sont également disposées respectivement face à face dans le plan diagonal, dans des conditions telles, que le mouvement de déplacement exercé sur celles-ci est linéaire et exempt de sollicitations dans le plan transversal et par conséquent exempt de couple de rotation.

2. Attache élastique selon la revendication 1, **caractérisée en ce qu'**il est prévu deux segments élastiques (14, 15).

3. Attache élastique selon la revendication 1 ou la revendication 2, **caractérisée en ce qu'**une languette de cramponnement (18, 19), s'étendant vers l'extérieur en s'écartant de la plaque de base (1), est disposée dans le prolongement du ou de chaque segment élastique (14, 15).

4. Attache élastique selon l'une des revendications 1 à 3, **caractérisée en ce que** les languettes d'accrochage (10, 11) sont raccordées par l'intermédiaire d'un bras de mise en prise d'encastrement (8, 9) aux segments de pivotement par effet d'articulation (6, 7).

5. Attache élastique selon l'une des revendications 1 à 4, **caractérisée en ce que** la plaque de base (1) est fermée au niveau de son pourtour périphérique et comporte une douille de guidage d'introduction (3) définissant un passage d'emmanchement (2), qui s'étend dans la direction du ou de chaque segment élastique (14, 15).

6. Attache élastique selon la revendication 5, **caractérisée en ce que** la longueur de la douille de guidage d'introduction (3) est plus petite que celle de la course de cèdage élastique du ou de chaque segment élastique (14, 15) dans le plan axial.

7. Attache élastique selon l'une des revendications 4 à 6, **caractérisée en ce que** les languettes d'accrochage (10, 11) sont, par rapport au bras de mise en prise d'encastrement (8, 9) correspondant dont elles constituent le prolongement, repliées selon une disposition angulaire allant en s'écartant de la plaque de base (1).

8. Attache élastique selon la revendication 7, **caractérisée en ce que** les languettes d'accrochage (10, 11) ont une configuration cunéiforme, les surfaces obliques étant en l'occurrence orientées dans la direction du segment de pivotement par effet d'articulation (6, 7) dont elles constituent le prolongement.
